(19) Europäisches Patentamt
European Patent Office
Office européen des brevets

(11) Veröffentlichungsnummer : 0 234 393 B1

(12) # EUROPÄISCHE PATENTSCHRIFT

(45) Veröffentlichungstag der Patentschrift : **04.09.91 Patentblatt 91/36**

(51) Int. Cl.$^5$ : **C08F 8/00**, C08F 6/14

(21) Anmeldenummer : **87101793.5**

(22) Anmeldetag : **10.02.87**

(54) **Polymerisataufarbeitung durch Sprühtrocknung.**

(30) Priorität : **22.02.86 DE 3605801**

(43) Veröffentlichungstag der Anmeldung : **02.09.87 Patentblatt 87/36**

(45) Bekanntmachung des Hinweises auf die Patenterteilung : **04.09.91 Patentblatt 91/36**

(84) Benannte Vertragsstaaten : **DE ES FR GB IT NL**

(56) Entgegenhaltungen :
**EP-A- 0 019 701**
**FR-A- 2 234 315**
**OA-A- 2 178**
**US-A- 2 961 290**

(73) Patentinhaber : **BAYER AG**
**W-5090 Leverkusen 1 Bayerwerk (DE)**

(72) Erfinder : **Lindner, Christian, Dr.**
**Riehlerstrasse 200**
**W-5000 Köln 60 (DE)**
Erfinder : **Bamelis, Pol, Dr.**
**Im Holz 20**
**W-5060 Bergisch Gladbach 3 (DE)**
Erfinder : **Hinz, Jürgen, Dr.**
**Kemmerhofstrasse 181**
**W-4150 Krefeld 1 (DE)**
Erfinder : **Wittmann, Dieter, Dr.**
**Dörperhofstrasse 15**
**W-4150 Krefeld 1 (DE)**
Erfinder : **Koch, Otto, Dr.**
**Morgengraben 12**
**W-5000 Köln 80 (DE)**
Erfinder : **Braun, Burkhard, Dr.**
**Mobay Corporation CED/PTG, Mobay Road**
**Pittsburgh, PA 15205-9741 (US)**

EP 0 234 393 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Aufarbeitung von Dispersionen thermoplastischer Polymerisate durch Sprühtrocknung, wobei Polymerisate anfallen, die die Herstellung hochwertiger Thermoplastformkörper erlauben.

Thermoplastische Polymerisate wie z. B. ABS, SAN, PVC, MBS, Polystyrol oder Pfropfpolymerisate von verschiedenen Monomeren auf Kautschukgrundlagen (welche beispielsweise als Schlagzähigkeitsmodifikatoren Verwendung finden), werden häufig durch Dispersionspolymerisation hergestellt. Sie fallen somit primär als Dispersionen an, aus denen die Polymerisate - üblicherweise durch Koagulation z.B. mit Elektrolyten oder durch Sprühtrocknung - isoliert werden. "Dispersion" schließt hier und im folgenden auch Emulsionen ein, insbesondere durch Emulsionspolymerisation entstandene Dispersionen, Emulsionen und Latices von Polymerisation.

Bei oder nach der Aufarbeitung der Polymerisat-Dispersionen durch Koagulation können die rohen Polymerisate gewaschen werden, um Begleitstoffe z.B. Hilfsstoffe aus der Polymerisation und der Koagulation weitgehend aus dem Polymerisat zu entfernen; bei der Aufarbeitung durch Sprühtrocknung ist dies dagegen nicht möglich.

Solche Begleitstoffe können die anwendungstechnischen Eigenschaften einer thermoplastischen Formmasse verschlechtern. Beispielsweise werden verschiedene Polymerisate durch Dispersionspolymerisation im alkalischen Milieu hergestellt, insbesondere dann, wenn mit Dispergatoren vom Fettsäuresalz-Typ gearbeitet wird. Für manche Anwendungen muß jedoch der in dem isolierten Polymerisat verbleibende Emulgator weitgehend in der freien Säureform vorliegen. Dies kann man erreichen, wenn man die Dispersionen mit Elektrolyten unter sauren Bedingungen koaguliert, nicht jedoch wenn man sprühtrocknet; denn: die alkalische Dispersion ist nicht in üblicher Weise auf einen sauren pH-Wert einzustellen, ohne daß sie instabil wird oder sogar partiell koaguliert. Könnte man durch Zugabe üblicher Säuren zur Dispersion einen pH-Wert kleiner 7 einstellen, so würden die bei der Sprühtrocknung im Polymerisat verbleibenden Säuren und Salze die Qualität der Polymerisate verschlechtern.

Es wurde gefunden, daß man Dispersionen thermoplastischer Polymerisate mit speziellen Säuren auf einen pH-Wert kleiner 7 acidifizieren und danach sprühtrocken kann, und dabei entgegen der Erwartung Rohpolymerisate erhält, die zu hochwertigen thermoplastischen Formmassen verarbeitbar sind.

Für dieses Verfahren eignen sich insbesondere Dispersionen, die als anionische Emulgatoren ein Gemisch von Fettsäuresalzen und Salzen organischer Sulfonsäuren enthalten. Solche Dispersionen sind auch nach der Acidifizierung so stabil, daß sich kein Koagulat bildet, so daß eine problemlose Sprühtrocknung möglich ist.

Gegenstand der Erfindung ist ein Verfahren zur Gewinnung von Polymerisaten durch Sprühtrocknung, das dadurch gekennzeichnet ist, daß man Dispersionen thermoplastischer Polymerisate aus olefinisch ungesättigten Monomeren, die mittels Gemischen von Carbonsäure-Alkalisalzen und Alkalisalzen organischer Sulfonsäuren als Emulgatoren hergestellt worden sind und die pH-Werte > 7 aufweisen, mit wenigstens einer Carbonsäure der Formel (I) versetzt

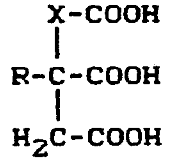

(I)

worin
X eine Einfachbindung, $-CH_2-$ oder $-C_2H_4-$ und
R -H, -OH oder

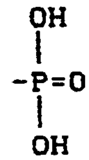

bedeutet,

wobei man pH-Werte der Dispersionen von kleiner 7, insbesondere von 6-4 einstellt, danach die resultierenden Dispersionen einer Sprühtrocknung unterwirft und die als Pulver anfallenden thermoplastischen Polymerisate abtrennt.

Besonders geeignete Dispersionen thermoplastischer Polymerisate enthalten als Emulgatoren Gemische von Carbonsäure-Alkalisalzen und Alkalisalzen organischer Sulfonsäuren, die vor der Acidifizierung einen pH von größer 7, insbesondere von 8-11, aufweisen.

Ein weiterer Gegenstand der Erfindung sind thermoplastische Formmassen, die nach einem erfindungsgemäßen Verfahren erhalten worden sind.

Thermoplastische Polymerisate im Sinne der Erfindung sind z.B. Pfropfcopolymerisate von olefinisch ungesättigten Monomeren wie Styrol, α-Methylstyrol, Acrylnitril, Methacrylnitril, Alkylmethacrylate mit bis zu 8 C-Atomen im Alkoholteil, Alkylacrylate mit bis zu 8 C-Atomen im Alkoholteil, Vinylchlorid, Vinylacetat, Vinylidenchlorid auf Kautschuke (als Pfropfgrundlage) wie Dienkautschuke, vorzugsweise auf der Basis von Butadien oder Isopren mit bis zu 40 Gew.-% eingebauten Comonomeren aus der Reihe Styrol, Acrylnitril, Methylmethacrylat, $C_1$-$C_6$-Alkylacrylat; Alkylacrylatkautschuke, gegebenenfalls mit bis zu 10 Gew.-% eingebauten Comonomeren wie Styrol, Acrylnitril, Methylmethacrylat, Vinylether, Vinylester; Olefinkautschuke z.B. Ethylen-Vinylacetat-Copolymere, Ethylen-Acrylat-Copolymere, Ethylen-Propylen-Copolymere. Besonders geeignet sind wenigstens teilvernetzte Kautschuke, vorzugsweise mit Gelgehalten von über 50 Gew.-%.

Bevorzugte Pfropfcopolymerisate besitzen Kautschukgehalte größer 15 Gew.-%, insbesondere größer 30 Gew.-%, besonders bevorzugte Kautschukgehalte von 50-80 Gew.-%.

Die Pfropfcopolymerisate sind durchweg bekannt.

Dem erfindungsgemäßen Verfahren werden Dispersionen der thermoplastischen Polymerisate in Wasser unterworfen. Diese Dispersionen werden durch Pfropfcopolymerisation der genannten Monomere auf in Dispersion befindlichen Kautschuken der oben genannten Art erzeugt. Diese Pfropfcopolymerisationen sind radikalischer Natur und werden durch Radikalerzeuger, wie wasserlösliche Persulfate, Perphosphaten, $H_2O_2$, Hydroperoxide oder Azoverbindungen induziert.

In den Dispersionen befindet sich ein dieser stabilisierender Emulgator, in einer dazu ausreichenden Menge, üblicherweise bis zu 3 Gew.-%, insbesondere bis zu 2 Gew.-%, bezogen auf den Polymerisatfeststoff.

Die erfindungsgemäß geeigneten Emulgatoren sind anionischer Natur und weisen in ihrem Molekül die charakteristischen Strukturelemente

$-COO^{(-)}Alkalimetall^{(+)}$ oder $-SO_3^{(-)}Alkalimetall^{(+)}$ auf.

Besonders bevorzugt sind Dispersionen, die Mischungen aus den beiden Emulgatorklassen enthalten, also wenigstens ein Alkalisalz von Carbonsäuren und wenigstens ein Alkalisalz einer organischer Sulfonsäure.

Als anionische Emulgatoren geeignete Carbonsäure-Alkalisalze sind gesättigte, ungesättigte oder substituierte langkettige oder cyclische Carbonsäurealkalisalze zum Beispiel Salze der Laurin-, Myristin-, Stearin-, Ölsäure-, Leinölfett-Säure sowie Harzseifen (disproportionierte Abietinsäure-, Kolophoniumseifen), Linolsäuresalze, Äthercarbonsäuresalze. Solche Emulgatoren sind bekannt.

Als anionische Emulgatoren geeignete Alkalisalze organischer Sulfonsäuren sind (substituierte) Alkyl- oder Arylsulfonate, zum Beispiel primäre oder sekundäre langkettige Alkylsulfonate, Alkylnaphthalinsulfonate, Alkylbenzolsulfonate, Ester der Sulfobernsteinsäure mit höheren Alkoholen und Mahagonisäuren. Diese Emulgatoren sind ebenfalls bekannt. (Siehe dazu auch: Houben-Weyl; Methoden der organischen Chemie, Band XIV/1, Makromolekulare Stoffe).

Besonders bevorzugt sind Mischungen aus Harzseifen oder Seifen langkettiger Fettsäuren und langkettiger Alkyl- oder Alkylarylsulfonate.

Die Polymerisatdispersionen können pH-Werte von ca. 11-3 aufweisen, besonders geeignet sind Dispersionen mit pH-Werten größer 7.

Die Polymerdispersionen werden gemäß der Erfindung mit wenigstens einer Tricarbonsäure der Formel (I) versetzt; Säuren der Formel (I) sind beispielsweise Propantricarbonsäuren und Butantricarbonsäuren, bevorzugt ist Zitronensäure und 2-Phosphono-1,2,4-butantricarbonsäure, besonders bevorzugt ist 2-Phosphono-1,2,4-butantricarbonsäure.

Besitzt die Polymerisatdispersion (Latex) bereits einen pH-Wert kleiner 7, so werden die Säuren der Formel (I) in Mengen von 0,01 bis 5 Gew.-%, insbesondere 0,1-3 Gew.-%, bezogen auf den Polymerfeststoffgehalt, vor der Aufarbeitung durch Sprühtrocknung in die Dispersion gegeben.

Besitzt die Polymerisatdispersion dagegen einen pH-Wert größer 7, dann wird soviel von wenigstens einer Säure der Formel (I) der Dispersion zudosiert, bis die Dispersion einen pH-Wert von 6-4, insbesondere 5-4, aufweist.

Die Säuren der Formel (I) werden üblicherweise in die Dispersionen in Form einer wäßrigen Lösung eindosiert, wobei für eine ausreichende Durchmischung der Komponenten gesorgt wird.

Die Zugabe der Säuren der Formel (I) zur Dispersion wird im Temperaturbereich von 20 bis 80°C, insbesondere im Bereich von 20 bis 50°C, vorgenommen.

Selbst alkalische Dispersionen mit hohen Ferststoffgehalten (Gehalten an Polymerisat) über 45 Gew.-% können mit den genannten Säuren aciditiziert werden, ohne daß eine Beeinträchtigung der Dispersionsstabilität festzustellen ist. Besonders hochkonzentrierte Dirpersionen kann man erfindungsgemäß behandeln, wenn sie mit den genannten Emulgatorgemischen stabilisiert sind.

Nach dem Zusatz der Säuren der Formel (I) und gegebenenfalls weiterer üblicher Additive wie Antioxidanzien werden die resultierenden Dispersionen unter üblichen Bedingungen sprühgetrocknet. Die thermoplastischen Polymerisate fallen dabei als fein- oder grobteilige Pulver mit überraschenderweise verbessertem Weißgrad an.

Die Pulver können wie für Thermoplasten üblich verarbeitet werden, beispielsweise durch Spritzguß, Extrusion oder Walzen und liefern Formkörper besonders hoher Thermostabilität und guten Rohtons. Aufgrund der verbesserten Stabilität ist es auch möglich, die Verarbeitungsbedingungen der Polymerisate zu thermoplastischen Formkörpern besonders wirtschaftlich zu gestalten. (Kürzere Zykluszeiten durch höhere Verarbeitungstemperaturen.)

Es wurde auch gefunden, daß Mischungen aus bekannten thermoplastischen Harzen und gemäß dem Verfahren der Erfindung hergestellten Pfropfpolymerisaten bessere anwendungstechnische Eigenschaften aufweisen als entsprechende Formmassen, die aus sprühgetrockneten Pfropfpolymerisaten üblicher Herstellung gewonnen wurden.Verbessert sind besonders Zähigkeit, insbesondere bei tiefen Temperaturen, Verarbeitbarkeit und Thermostabilität.

Thermoplastische Formmassen im Sinne der Erfindung sind somit Mischungen aus wenigstens einem erfindungsgemäß erhaltenem Pfropfpolymerisat, insbesondere mit Kautschukgehalten größer 25 Gew.-%, besonders bevorzugt größer 50 Gew.-%, und wenigstens einem üblichen thermoplastischen Harz. Die thermoplastischen Formmassen enthalten vorzugsweise bis zu 50 Gew.-% Pfropfpolymerisat, besonders bevorzugt bis zu 35 Gew.-% Pfropfpolymerisat.

Thermoplastische Harze im Sinne der Erfindung sind Styrol oder α-Methylstyrol-Copolymere mit Comonomergehalten bis zu 35 Gew.-% und Acrylnitril, Methylmethacrylat, N-substituiertes Maleinimid als Comonomer; Polymethylmethacrylat mit Comonomergehalten bis zu 10 Gew.-% und Styrol, Acrylsäurealkylester (mit bis zu 6 C-Atomen im Alkoholteil), Vinylether als Comonomer; Polyvinylchlorid; Polyester, vorzugsweise Terephthalsäurepolyester mit Äthylenglykol oder Butylenglykol, Polycarbonate, vorzugsweise aromatische Polycarbonate mit Bisphenolen (z.B. Bisphenol A) als Diolkomponente und Polyamide, vorzugsweise kristalline, teilkristalline oder amorphe Polyamide, insbesondere Polyamid-6 und Polyamid-66.

Besonders bevorzugte thermoplastische Formmassen im Sinne der Erfindung sind Styrol-Acrylnitrilcopolymer, α-Methylstyrol-Acrylnitril-Copolymer, Polyvinylchlorid, Polyamid-6, Polyamid-66, Polybutylenterephthalat oder Bisphenol-A-Polycarbonat mit wenigstens einem im Sinne der Erfindung hergestellten Pfropfpolymerisat, wobei die Zahl der Mischungskomponenten auch größer als 2 sein kann.

## Beispiele

### 1. Pfropfkautschukdispersion

1.1 (Vergleich) In einem Reaktor werden vorgelegt:

2370 Gew.-Teile eines Polybutadienlatex mit einem Polybutadiengehalt von 50 Gew.-% und einem Gelgehalt von 87 Gew.-%; (Emulgator: Dar Na-Salz der disproportionierten Abietinsäure verwendet; Herstellung: Bei pH-Wert von 10 durch radikalische Emulsionspolymerisation; mittlerer Latexteilchendurchmesser ($d_{50}$) = 0,38 µm)
und 900 Gew.-Teile Wasser.

Nach Aufheizen unter Rühren auf 65 bis 67°C wird mittels einer Lösung von 3,5 Gew.-Teilen Kaliumperoxodisulfat in 100 Gew.-Teilen Wasser initiiert. Anschließend werden die unten aufgeführten Lösungen getrennt voneinander innerhalb von 4 Stunden bei 65°C in den Reaktor unter Rühren eingespeist.

| | | |
|---|---|---|
| Lösung a) | 270 Gew.-Teile | Methylmethacrylat |
| | 30 " | n-Butylacrylat |

| | | | |
|---|---|---|---|
| Lösung b) | 410 | Gew.-Teile | Wasser |
| | 28 | " | Na-Salz der disproportionierten Abietinsäure |
| | 20 | " | 1n-Natronlauge |

Nach weiteren 4 Stunden ist die Pfropfpolymerisation beendet. Die resultierende Dispersion wird mit 2 Gew.-Teilen eines phenolischen Antioxidans stabilisiert. Sie besitzt einen Feststoffgehalt von 35,9 Gew.-% und einen pH-Wert von 8,48.

1.2 In einem Reaktor werden vorgelegt:

5880 Gew.-Teile der in 1.1 beschriebenen Polybutadiendispersion
und 800 Gew.-Teile Wasser.

Nach Aufheizen unter Rühren auf 65 bis 67°C wird mittels einer Lösung von 9 Gew.-Teilen Kaliumperoxodisulfat in 75 Gew.-Teilen Wasser initiiert. Anschließend werden die unten aufgeführten Lösungen getrennt innerhalb von 4 Stunden bei 65°C in den Reaktor unter Rühren eingespeist.

| | | | |
|---|---|---|---|
| Lösung a) | 661 | Gew.-Teile | Methylmethacrylat |
| | 74 | " | n-Butylacrylat |

| | | | |
|---|---|---|---|
| Lösung b) | 100 | Gew.-Teile | Wasser |
| | 65 | " | Na-Salz einer $C_{14-18}$-Alkylsulfonsäure |

Nach weiteren 4 Stunden ist die Pfropfpolymerisation beendet. Die resultierende Dispersion wird mit 2 Gew.-Teilen eines phenolischen Antioxidans stabilisiert. Sie besitzt einen Feststoffgehalt von 49 Gew.-% und einen pH-Wert von 8,5.

1.3 In einem Reaktor werden vorgelegt:

4650 Gew.-Teile der in 1.1 beschriebenen Polybutadiendispersion,
2325 Gew.-Teile Wasser.

Nach Aufheizen unter Rühren auf 65°C wird mittels einer Lösung von 6 Gew.-Teilen Kaliumperoxodisulfat in 150 Gew.-Teilen Wasser initiiert. Anschließend werden die unten aufgeführten Lösungen getrennt innerhalb von 4 Stunden bei 65°C in den Reaktor unter Rühren eingespeist.

| | | | |
|---|---|---|---|
| Lösung a) | 562 | Gew.-Teile | Styrol |
| | 219 | " | Acrylnitril |

| | | | |
|---|---|---|---|
| Lösung b) | 1250 | Gew.-Teile | Wasser |
| | 30 | " | Na-Salz einer $C_{14-18}$-Alkylsulfonsäure. |

Nach weiteren 4 Stunden ist die Propfpolymerisation beendet. Die resultierende Dispersion wird mit 2 Gew.-Teilen eines phenolischen Antioxidans stabilisiert. Sie besitzt einen Feststoffgehalt von 33 Gew.-% und einen pH-Wert von 9.

2. Vorbereitung der Latices zur Sprühtrocknung

2.1 (Vergleich) Die Pfropfpolymerisatdispersion aus Beispiel 1.1 wird mit 20 gew.-%igen Lösungen der Säuren 2.1.1 bis 2.1.7 in Wasser versetzt, bis die Dispersion einen pH-Wert von 4 - 5 aufweist:

2.1.1 Essigsäure
2.1.2 Ameisensäure
2.1.3 Schwefelsäure
2.1.4 Salzsäure
2.1.5 Phosphorsäure
2.1.6 Zitronensäure
2.1.7 2-Phosphono-1,2,3-butantricarbonsäure

In jedem Fall wird eine Koagulation und Aufrahmung der Dispersion beobachtet. Eine Weiterverarbeitung über Sprühtrocknung ist nicht möglich.

2.2 Die Pfropfpolymerisatdispersion gemäß Beispiel 1.2 wird mit 20 gew.-%igen Lösungen der Säuren 2.2.1-2.2.6 in Wasser versetzt, bis die Dispersion einen pH-Wert von 4-5 aufweist.

| | | |
|---|---|---|
| 2.2.1 | mit Essigsäure | (Vergleich) |
| 2.2.2 | mit Schwefelsäure | (Vergleich) |
| 2.2.3 | mit Phosphorsäure | (Vergleich) |
| 2.2.4 | mit Ameisensäure | (Vergleich) |
| 2.2.5 | mit Zitronensäure | |
| 2.2.6 | mit 2-Phosphono-1,2,4-butantricarbonsäure | |

In allen Fällen werden nach der Acidifizierung dünnflüssige scherstabile Dispersionen erhalten. Die Dispersion mit Säure 2.2.5 enthält danach 0,653 Gew.-% Zitronensäure, bezogen auf Polymerfeststoff. Die Dispersion mit Säure 2.2.6 enthält danach 0,490 Gew.-% Phosphonotricarbonsäure, bezogen auf Polymerfeststoff.

2.3 Der Pfropfpolymerisatdispersion gemäß Beispiel 1.3 wird mit 20 gew.-%igen Lösungen der Säuren 2.3.1-2.3.3 in Wasser versetzt und auf einen pH-Wert von 5 eingestellt.

| | | |
|---|---|---|
| 2.3.1 | mit Essigsäure | (Vergleich) |
| 2.3.2 | mit Ameisensäure | (Vergleich) |
| 2.3.3 | mit Zitronensäure | |

In allen Fällen werden nach der Acidifizierung scherstabile Dispersion erhalten.

Aus den Versuchen 2.1 bis 2.3 geht hervor, daß aus alkalischen Dispersionen durch Zusatz von Säuren nur dann Dispersionen mit einem sauren pH-Wert herstellbar sind, wenn Pfropfpolymerdispersionen mittels eines speziellen Emulgatorgemisches hergestellt worden sind.

3. Sprühtrocknung der Dispersionen

In einem Laborsprühtrockner (Fa. Nubilosa, Konstanz) mit 1 m³ Volumen wurden untenstehende Dispersionen mittels einer Zweistoffdüse zerstäubt und bei einer Heißgastemperatur von 160°C und einer Ablufttemperatur von 80°C auf eine Restfeuchte von weniger als 0,5 Gew.-% getrocknet:

| | | | | | |
|---|---|---|---|---|---|
| 3.1 | Polymerisat | aus | Dispersion | 1.2 | (Vergleich) |
| 3.2 | " | " | " | 2.2.1 | (Vergleich) |
| 3.3 | " | " | " | 2.2.2 | (Vergleich) |
| 3.4 | " | " | " | 2.2.3 | (Vergleich) |
| 3.5 | " | " | " | 2.2.4 | (Vergleich) |

| | | | | | |
|---|---|---|---|---|---|
| 3.6 | " | " | " | 2.2.5 | |
| 3.7 | " | " | " | 2.2.6 | |
| 3.8 | " | " | " | 2.3.1 | (Vergleich) |
| 3.9 | " | " | " | 2.3.2 | (Vergleich) |
| 3.10 | " | " | " | 2.3.3 | |

4. Eigenschaften der Polymerisatpulver

Der Weißgrad dar Pulver 3.8, 3.9, 3.10 wird visuell beurteilt.

| | | | |
|---|---|---|---|
| Pulver | 3.8 | + | (Vergleich) |
| " | 3.9 | + | (Vergleich) |
| " | 3.10 | ++ | |

----------------

+ = weißes Pulver

++ = im Vergleich zu den Pulvern 3.8 und 3.9 ist der Weißgrad deutlich erhöht.

5. Eigenschaften der Polymerisatpulver in einer thermoplastischen Formmasse

5.1 Eingesetzte thermoplastische Harze

5.1.1 Polyamid-6 mit einer Viskosität von $\eta_{rel}$ = 2.9, gemessen in m-Kresol bei 25°C (als 1 %ige Lösung).

5.1.2 Polyamid-6 mit einer Viskosisät von $\eta_{rel}$ = 3.5, gemessen in m-Kresol bei 25°C (als 1 %ige Lösung).

Die Polyamide wurden mit unterschiedlichen Mengen Pfropfpolymerisat auf einem kontinuierlichen Doppelwellenextruder gemischt. Die Masstemperatur betrug 270-280°C. Der Schmelzstrang wurde vor der Düse entgast, in Wasser abgekühlt, granuliert und getrocknet. Die Formmassen wurden auf einer Spritzgußmaschine zu ASTM-Stäben verarbeitet. Geprüft wurde die Kerbschlagzähigkeit nach Izod. Weiterhin wurde die Fließkänge ermittelt.

Die hergestellten Compounds gibt Tab. 1 wieder. Einige relevante anwendungstechnische Eigenschaften der Thermoplastmassen sind in Tab. 2 wiedergegeben.

Tabelle 1 Zusammensetzung der Polyamidcompounds (Angaben in Gew.-%)

| Beispiel | Polyamid-Typ 5.1.1 | Polyamid-Typ 5.1.2 | Pfropfpolymerisat | | |
|---|---|---|---|---|---|
| 5.2 | 70 | | 30 | 3.1 | (Vergleich) |
| 5.3 | 70 | | 30 | 3.2 | (Vergleich) |
| 5.4 | 70 | | 30 | 3.3 | (Vergleich) |
| 5.5 | 70 | | 30 | 3.4 | (Vergleich) |
| 5.6 | 70 | | 30 | 3.5 | (Vergleich) |
| 5.7 | 70 | | 30 | 3.6 | |
| 5.8 | 70 | | 30 | 3.7 | |
| 5.9 | | 82,5 | 17,5 | 3.1 | (Vergleich) |
| 5.10 | | 82,5 | 17,5 | 3.2 | (Vergleich) |
| 5.11 | | 82,5 | 17,5 | 3.3 | (Vergleich) |
| 5.12 | | 82,5 | 17,5 | 3.4 | (Vergleich) |
| 5.13 | | 82,5 | 17,5 | 3.5 | (Vergleich) |
| 5.14 | | 82,5 | 17,5 | 3.6 | |
| 5.15 | | 82,5 | 17,5 | 3.7 | |

Tabelle 2 Eigenschaften der thermoplastischen Formmassen

| Bsp. | Kerbschlagzähigkeit nach Izod [J/m] +20° C | -10° C | -20° C | -30° C | -40° C | Fließlänge [cm] |
|---|---|---|---|---|---|---|
| 5.2 | 1069 | - | 931 | 329 | 240 | - (Vergleich) |
| 5.3 | 954 | - | 297 | - | - | 34,5 (Vergleich) |
| 5.4 | 1052 | - | 805 | 714 | 174 | 23,5 (Vergleich) |
| 5.5 | 912 | - | 216 | - | - | 33,5 (Vergleich) |
| 5.6 | 1020 | - | 428 | 230 | - | 26 (Vergleich) |
| 5.7 | 1039 | - | 802 | 657 | 185 | 32 |
| 5.8 | 1060 | - | 900 | 605 | 240 | 34 |
| 5.9 | 989 | - | 254 | - | - | - (Vergleich) |
| 5.10 | 146 | - | - | - | - | - (Vergleich) |
| 5.11 | 1143 | 455 | 222 | - | - | - (Vergleich) |
| 5.12 | 1120 | 582 | 216 | - | - | - (Vergleich) |
| 5.13 | 161 | - | - | - | - | - (Vergleich) |
| 5.14 | 1326 | 670 | 514 | - | - | - |
| 5.15 | 1290 | 605 | 560 | - | - | - |

Aus dem Vergleich der in Tabelle 2 aufgeführten Messwerte ergibt sich:

Unter den Formmassen mit 30 Gew.-% Pfropfkautschuk weist die auf einer alkalischen Dispersion basierende Formmasse 5.2 keine optimalen Eigenschaften auf.

Die auf den sauren Dispersionen 5.3 bis 5.8 basierenden Formmassen unterscheiden sich durch die zur Acidifizierung eingesetzte Säure: Nur Schwefelsäure, Zitronensäure und Phosphonotricarbonsäure führen zu Formmassen mit guten Zähigkeiten auch bei tiefen Temperaturen.

Aus den weiteren Formmassendaten (5.9 bis 5.14) ist ein analoges Eigenschaftsverhalten ersichtlich. Die erfindungsgemäßen Formmassen 5.14 und 5.15 besitzen eine hervorragende Tieftemperaturzähigkeit.

## Patentansprüche

1. Verfahren zur Gewinnung von Polymerisaten durch Sprühtrocknung, dadurch gekennzeichnet, daß man Dispersionen von thermoplastischen Polymerisaten aus olefinisch ungesättigten Monomeren, die mittels Gemischen von Carbonsäure-Alkalisalzen und Alkalisalzen organischer Sulfonsäuren als Emulgatoren hergestellt worden sind und die pH-Werte > 7 aufweisen, mit wenigstens einer Carbonsäure der Formel (I) versetzt,

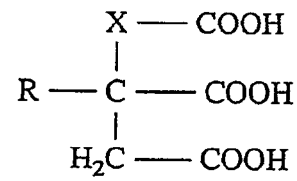

worin
X eine Einfachbindung, $-CH_2-$ oder $-C_2H_4-$ und
R -H, -OH oder

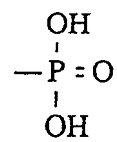

bedeutet,
wobei man die pH-Werte der Dispersionen auf Werte < 7 einstellt, danach die resultierenden Dispersionen sprühtrocknet und die als Pulver anfallenden thermoplastischen Polymerisate abtrennt.

2. Thermoplastische Formmassen, enthaltend Polymerisate hergestellt nach Anspruch 1.

## Revendications

1. Procédé pour isoler des polymères par séchage-atomisation, caractérisé en ce que, à des dispersions de polymères thermoplastiques de monomères à insaturation oléfinique, qui ont été préparées à l'aide de mélanges de sels alcalins d'acides carboxyliques et de sels alcalins d'acides organiques sulfoniques servant d'agents émulsionnants et qui sont à des pH supérieurs à 7, on ajoute au moins un acide carboxylique de formule I

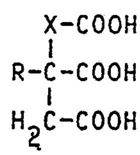
(I)

dans laquelle
X représente une liaison simple, $-CH_2-$ ou $-C_2H_4-$ et
R représente -H, -OH ou

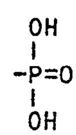

et on règle le pH des dispersions à des niveaux inférieurs à 7, puis on soumet les dispersions à séchage-atomisation et on sépare les polymères thermoplastiques à l'état de poudres.

2. Matières à mouler thermoplastiques contenant des polymères préparés selon la revendication 1.

## Claims

1. A process for the recovery of polymers by spray drying, characterised in that at least one carboxylic acid corresponding to formula (I)

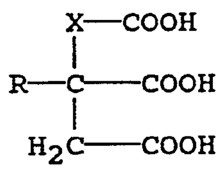

wherein
X denotes a single bond, $CH_2$ or $C_2H_4$ and
R denotes H, OH or

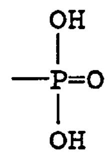

is added to dispersions of thermoplastic polymers of olefinically unsaturated monomers which have been prepared with the aid of mixtures of alkali metal salts of carboxylic acids and alkali metal salts of organic sulphonic acids as emulsifiers and which have pH values >7, the pH values of the dispersions being adjusted to values <7 and the resulting dispersions being then spray dried and the thermoplastic polymers obtained in the form of a powder being separated.

2. Thermoplastic moulding compounds containing polymers prepared according to Claim 1.